# EUROPÄISCHE PATENTSCHRIFT

(11) **EP 0 990 296 B1**
(45) Veröffentlichungstag und Bekanntmachung des Hinweises auf die Patenterteilung: **17.12.2003**
(21) Anmeldenummer: 98925373.7
(22) Anmeldetag: 19.06.1998
(51) Int. Cl.: H02K 7/09, H02K 21/02

(54) **MAGNETGELAGERTER ELEKTRISCHER ANTRIEB**
MAGNETIC BEARING ELECTRIC DRIVE MECHANISM
MACHINE ELECTRIQUE A PALIER MAGNETIQUE

(30) Priorität: 21.06.1997 DE 19726351
(43) Veröffentlichungstag der Anmeldung: 05.04.2000
(73) Patentinhaber: LUST ANTRIEBSTECHNIK GmbH, D-35633 Lahnau (DE)
(72) Erfinder: AMRHEIN, Wolfgang, A-4100 Ottensheim (AT)
(74) Vertreter: Sulzer Management AG
(86) Internationale Anmeldenummer: CH9800267
(87) Internationale Veröffentlichungsnummer: WO98059406

(56) Entgegenhaltungen:
- EP-A- 0 768 750
- US-A- 5 036 235
- US-A- 5 424 595
- OKADA Y. ET AL: 'Levitation and torque control of internal permanent magnet type bearingless motor' IEEE TRANSACTIONS ON CONTROL SYSTEMS TECHNOLOGY Bd. 4, Nr. 5, September 1996, Seiten 565 - 571, XP000638977

## Beschreibung

Die Erfindung bezieht sich auf einen magnetgelagerten elektrischen Antrieb, gemäss dem Oberbegriff des unabhängigen Patentanspruchs.

Die Magnetlagertechnik erschließt Applikationsfelder des Maschinen- und Gerätebaus mit äußerst hohen Anforderungen an den Drehzahlbereich, die Lebensdauer, die Reinheit und die Dichtheit des Antriebssystems - also im wesentlichen Anwendungsgebiete, die unter Verwendung konventioneller Lagertechniken nicht oder nur schwer realisierbar sind. Verschiedene Ausführungen, wie beispielsweise Hochgeschwindigkeitsfräs- und Schleifspindeln, Turbokompressoren, Vakuumpumpen, oder Pumpen für hochreine chemische oder medizinische Erzeugnisse werden bereits mit Magnetlagern ausgerüstet.

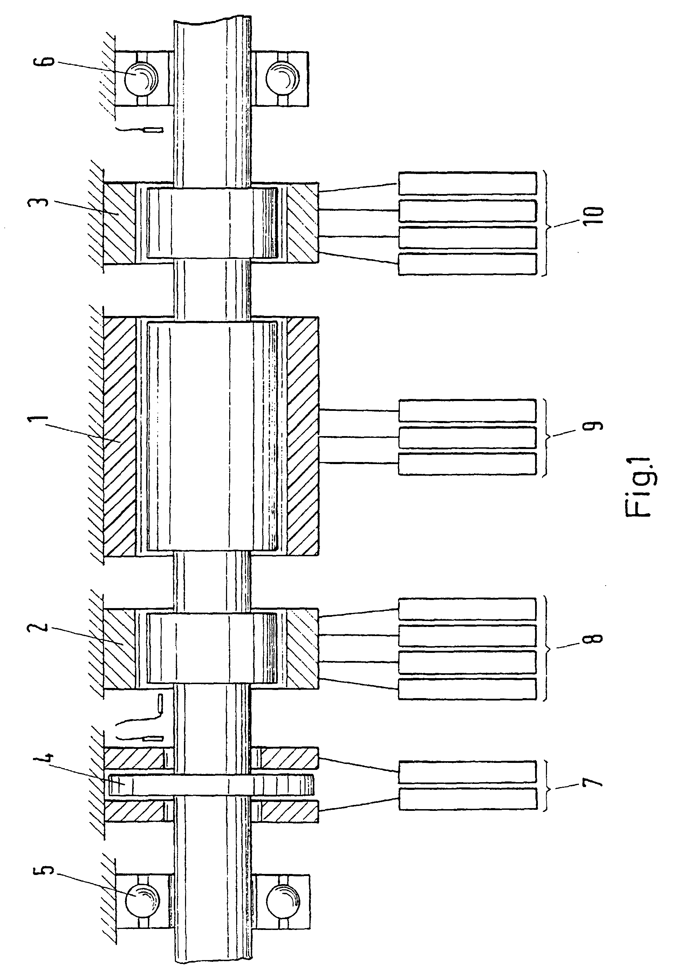

Eine konventionelle magnetgelagerte elektrische Maschine (Fig. 1) benötigt neben einer Maschineneinheit 1 zwei Radial-Magnetlager 2 und 3, ein Axial-Magnetlager 4, zwei mechanische Auffanglager 5 und 6, sowie für die Ansteuerung der Motor- und Magnetlagerstränge insgesamt dreizehn Leistungssteller 7, 8, 9, 10.

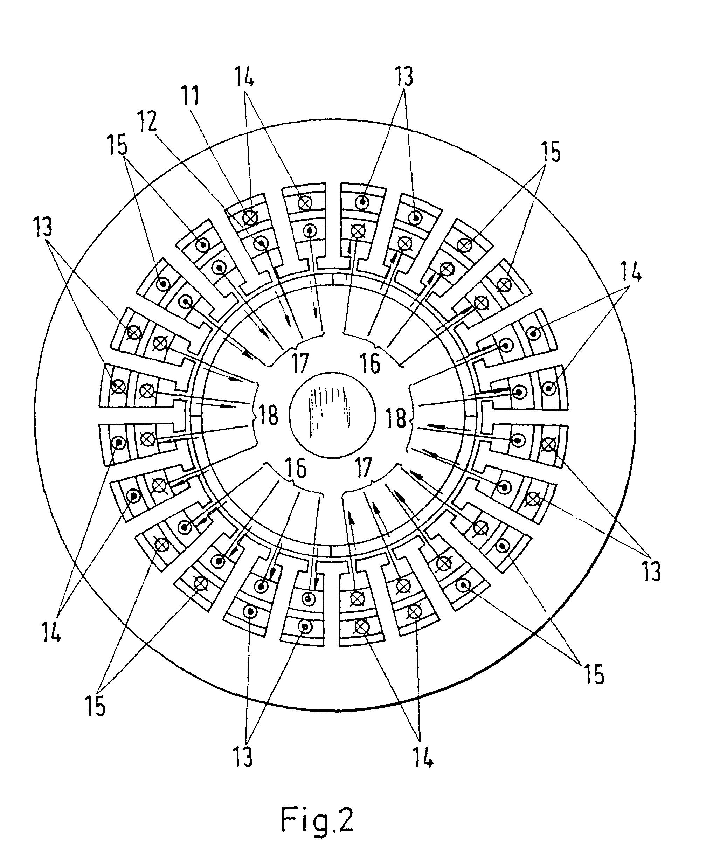

In der Literatur gibt es Vorschläge (Fig. 2), Maschine und Radialmagnetlager in einer magnetischen Statoreinheit zu integrieren. In einem Stator sind zwei getrennte Wicklungssysteme 11 und 12 für die Drehmoment- und Tragkraftwicklung mehrlagig in Nuten eingebracht. Beide Wicklungssysteme sind dreisträngig und unterscheiden sich in der Polpaarzahl um eins. Die Spulen sind über mehrere Nuten verteilt. Das Beispiel in Fig. 2 zeigt:
- eine vierpolige Maschinenwicklung 11 (außen): erster Strang 13, zweiter Strang 14, dritter Strang 15
- eine zweipolige Tragwicklung 12 (innen): erster Strang 16, zweiter Strang 17, dritter Strang 18.
   Die Pfeile (ohne Bezugszeichen) vom Rotor in Richtung zum Stator hin bzw. vom Stator in Richtung zum Rotor hin stehen für die Richtung der Magnetisierung der vier magnetischen Rotorsegmente (z.B. radiale oder diametrale Magnetisierung).

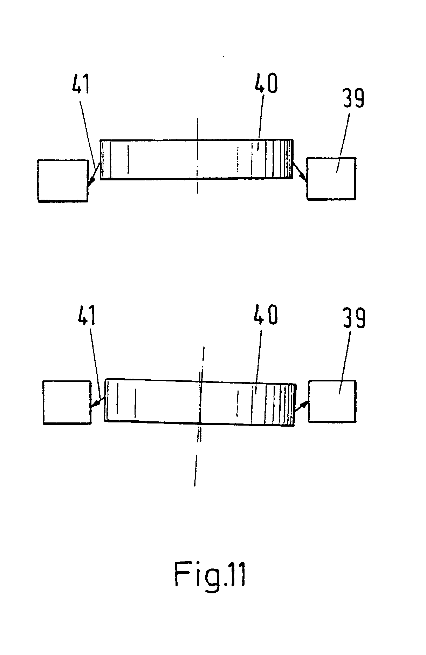

In Applikationen, die keine achsenstarre Rotorführung erfordern, wie beispielsweise in Ventilatoren, Lüftern, Pumpen oder Mischern kann in der integrierten Maschinen-Magnetlagerausführung das Axial-Magnetlager sowie das zweite Radial-Magnetlager entfallen. Voraussetzung hierfür ist eine scheibenförmige Ausführung des Rotors mit einer gegenüber dem Rotordurchmesser kleinen Längenabmessung (siehe Fig. 11). Über den magnetischen Zug 41 zwischen Stator 39 und Rotor 40 läßt sich somit eine passive Stabilisierung der Rotorlage in axialer Richtung und den Kipprichtungen erzielen.

In Dokument US 5 424 595 A wird ein geschalteter Reluktanzantrieb offenbart, der mit vorstehenden Statorpolen und einzeln erregbaren Phasenwindungen ausgestattet. Die einzelnen Phasenwindungen dienen sowohl zur Erzeugung eines Drehmomentes als auch zur Erzeugung einer Tragkraft für die magnetische Lagerung des Rotors.

Im Dokument EP 0 768 750 A wird ein weiterer geschalteter Reluktanzantrieb offenbart, mittels welchem ein magnetgelagerter Rotor mit hoher Geschwindigkeit rotiert werden kann. Der Reluktanzantrieb gemäss EP 0 768 750 A ist mit vorstehenden Statorpolen ausgestattet, welche mit Wicklungen zur Drehmomentbildung und zur Erzeugung einer Radialkraft versehen sind.

Im Dokument Yohji Okada et al.: "Levitation and Torque Control of Internal Permanent Magnet Type Bearingless Motor", IEEE Transactions on Control Systems Technology, Bd. 4, Nr. 5, Sept. 1996, Seiten 556-571, XP000638977 wird ein "lagerloser" Motor mit Permanentmagneterregung beschrieben. Das Dokument XP000638977 beschreibt insbesondere die Regelung des Magnetlagers für den Fall des permanentmagneterregten Synchronmotors und des Induktionsmotors. Die Tragkräfte werden durch Superposition eines (P+2)- oder (P-2)-poligen magnetischen Flusses mit dem normalen magnetischen Fluss des Motors (Polzahl P) erzeugt.

In vielen Fällen stehen jedoch dem technischen Einsatz der Magnetlagerung der aufwendige Systemaufbau und damit die hohen Herstellkosten im Wege. Die durch die Erfindung zu lösende Aufgabe besteht daher in der Vereinfachung des mechanischen Aufbaus der Maschinen- und Magnetlagereinheit unter Berücksichtigung der hierfür geeigneten elektronischen Ansteuerung.

Die erfindungsgemäße Lösung dieser Aufgabe geht aus dem unabhängigen Patentanspruch hervor. Bevorzugte Ausführungsvarianten sind durch die abhängigen Ansprüche definiert.

Von besonderem Vorteil bei der erfindungsgemäßen Lösung des Problems ist der wesentlich vereinfachte Stator- bzw. Rotor- und Wicklungsaufbau der magnetgelagerten Maschine gegenüber bisher bekannten Lösungen sowie die Einsparung von Leistungsstellern.

Ausführungsbeispiele der Erfindung sind nachstehend anhand der Zeichnungen erläutert. Es zeigen in schematischer Darstellung:
- Fig. 1: ein Ausführungsbeispiel einer konventionellen magnetgelagerten elektrischen Maschine,
- Fig. 2: ein Ausführungsbeispiel einer konventionellen magnetgelagerten elektrischen Maschine, bei der Maschine und Radialmagnetlager in einer magnetischen Statoreinheit integriert sind,
- Fig. 3: ein Ausführungsbeispiel eines erfindungsgemässen magnetgelagerten elektrischen Antriebs,
- Fig. 4: das Ausführungsbeispiel aus Fig. 3 mit einer Einzeldarstellung der ersten Stromkomponente, die der Erzeugung eines Drehmoments dient (vierpoliges Feld),
- Fig. 5: das Ausführungsbeispiel des Antriebs aus Fig. 3 mit einer Einzeldarstellung der zweiten Stromkomponente, die eine der beiden Stromkomponenten zur Erzeugung einer radial wirkenden Tragkraft bildet (zweipoliges Feld),
- Fig.6: das Ausführungsbeispiel des Antriebs aus Fig. 3 mit einer Einzeldarstellung der dritten Stromkomponente, die die andere der beiden Stromkomponenten zur Erzeugung einer radial wirkenden Tragkraft bildet (zweipoliges Feld),
- Fig. 7: ein Ausführungsbeispiel einer Brückenschaltung zur Ansteuerung der Wicklungen des Antriebs gemäss Fig. 3,
- Fig. 8: ein Ausführungsbeispiel des Antriebs mit gesehnten konzentrierten Wicklungen sowie mit ausgeprägten Polen und Hilfspolen,
- Fig. 9: eine wicklungstechnische Variante eines Antriebs, welche drei Stränge aufweist,
- Fig. 10: ein Ausführungsbeispiel des erfindungsgemässen Antriebs mit unsymmetrischem Blechschnitt im Bereich der Wicklungspole,
- Fig. 11: ein Ausführungsbeispiel eines Antriebs mit scheibenförmigem Rotor und passiver Stabilisierung in axialer Richtung und in den Kipprichtungen,
- Fig. 12: eine Darstellung der winkelabhängigen Kraftschwankungen bei nichtsinusförmigen Statorstrombelagsverteilungen und nichtsinusförmiger Erregerfeldverteilung im Luftspalt,
- Fig. 13: ein Ausführungsbeispiel eines erfindungsgemässen Antriebs mit einem Hilfsmagneten zur Sicherstellung des Anlaufs bei einem Motorbetrieb mit Wechselfeld,
- Fig. 14: ein Ausführungsbeispiel eines erfindungsgemässen Antriebs mit einseitig auf den Statorpolen angebrachten Kurzschlussringen,
- Fig. 15: zu Polwicklungen zusammengeschaltete Spulen,
- Fig. 16: eine Möglichkeit des gesteuerten Abwälzens des Rotors an den Statorpolen
und
- Fig. 17: ein Ausführungsbeispiel eines erfindungsgemässen Antriebs mit einer speziellen Formgebung der Rotormagnete zur Erzielung einer sinusförmigen Erregerfeldverteilung im Luftspalt.

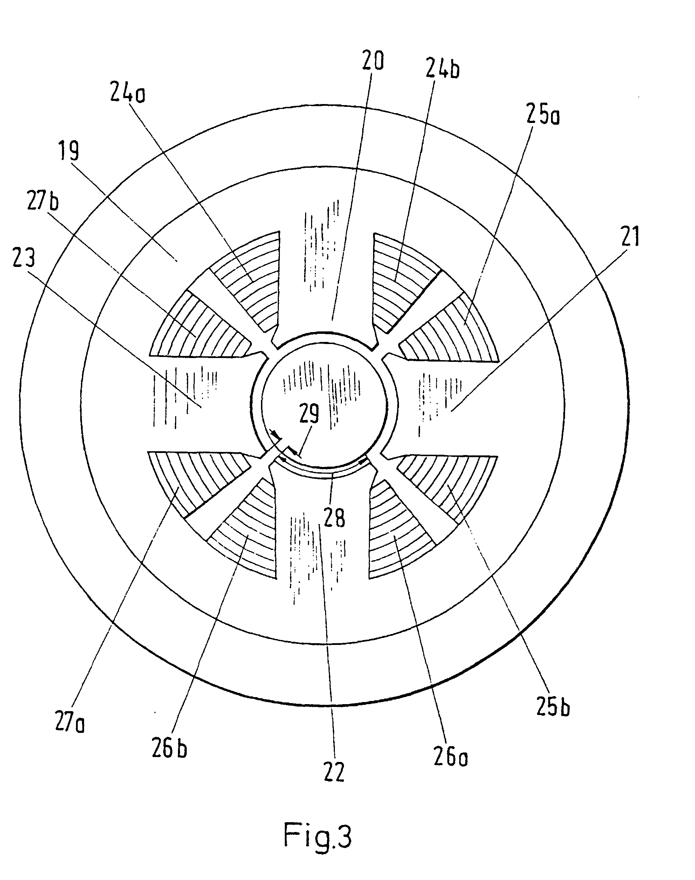

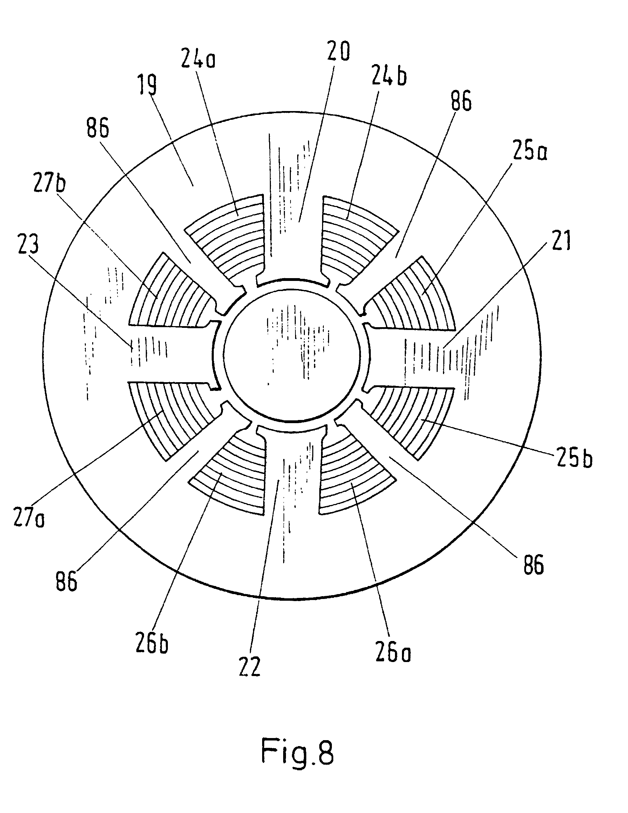

Fig. 3 zeigt eine Ausführungsform einer integrierten Maschinen-Magnetlager-Einheit. Hierbei werden nicht, wie bei der konventionellen Ausführung gemäss Fig. 2, zwei getrennte Wicklungssysteme mit unterschiedlichen Polpaarzahlen in den Stator eingebracht, sondern die Funktionen der Drehmoment- und Tragkraftbildung in einem Wicklungssystem integriert. Dieses Wicklungssystem setzt sich aus einzelnen am Umfang verteilten Polwicklungen 24,25,26,27 zusammen. Dadurch, dass diese Polwicklungen, wie nachfolgend noch beschrieben, durch eigene Stromversorgungen gespeist werden, lassen sich, wie für die Drehmoment- und Tragkraftbildung erforderlich, im Luftspalt magnetische Felder mit unterschiedlichen Polpaarzahlen realisieren. Es sei hier auch erwähnt, dass eine solche Maschine abhängig von der Applikation sowohl als Motor als auch als Generator betrieben werden kann. Als Ausführungsbeispiel für die Funktionsbeschreibung wird eine Anordnung nach Fig. 3 gewählt, deren Stator aus einem Blechschnitt 19 mit vier ausgeprägten Polen 20,21,22,23 und vier konzentrierten Polwicklungen 24,25,26,27 und deren Rotor aus einem vierpoligen Permanentmagnetrotor gebildet wird. Die Wicklungsspulen eines Strangs sind im Gegensatz zur Ausführung in Fig. 2 nicht über mehrere Nuten verteilt. Eine Sehnung zur Reduktion des Oberschwingungsgehaltes von Spannung und Strom ist in dem Blechschnitt 19 nicht vorgesehen, könnte aber durch Verkürzen der Polweiten 28 (siehe Fig. 8) erfolgen. Bei starker Sehnung ist es unter Umständen für den Maschinenrundlauf günstig, die durch Verkürzen der Polweite entstehende große Nutlücke 29 mit einem ferromagnetischen Hilfspol 86 (siehe Fig. 8), der ohne Wicklung bleiben kann, weitgehend zu schließen. Der Blechschnitt 19 ist beispielsweise zur besseren Kühlung in einem ihn umgebenden Aluminiumring bzw. in einem ihn umgebenden Aluminiumzylinder eingefasst.

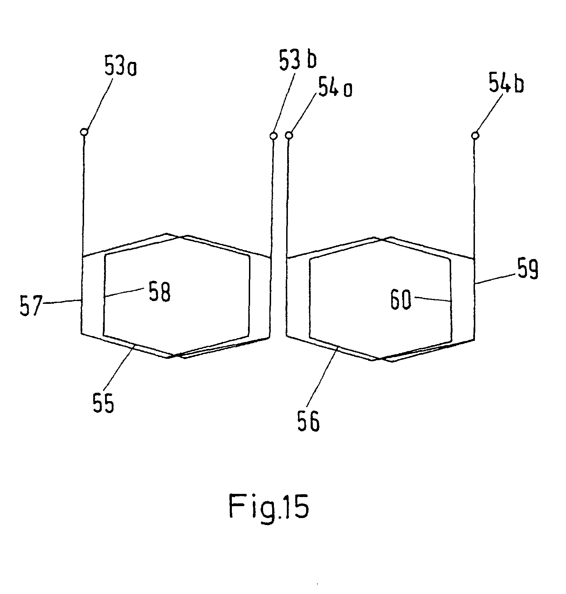

Eine sinusförmige Flußverkettung kann auch über eine Verteilung von mehreren Spulen (dargestellt sind zwei) erreicht werden. Im Unterschied zu den bisher bekannten Ausführungen von magnetgelagerten Antrieben sind die Spulen 57,58 und 59,60 jedoch, wie z.B. in Fig. 15 dargestellt, zu Polwicklungen 55 bzw. 56 mit eigenem Elektronikanschluss 53a,53b (diese bilden zusammen den Anschluss 53) bzw. 54a,54b (diese bilden zusammen den Elektronikanschluss 54) zusammengeschaltet. Die verteilten Wicklungsspulen können in Nuten eingelegt oder auch als eisenlose Luftspaltwicklung ähnlich den Glockenankermotoren realisiert werden. Fig. 15 zeigt exemplarisch zwie der insgesamt vier Polwicklungen nach Fig. 3 in verteilter anstelle einer konzentrierten Ausführung.

Im Gegensatz zur Ausführung in Fig. 2 gibt es keine getrennte Momentenund Tragwicklung. Jede der vier Polwicklungen 24,25,26,27 ist sowohl für die Momentenbildung als auch für die Tragkraftbildung zuständig. Die Realisierung beider Funktionen kann über eine entsprechende Stromspeisung mit drei in den Polwicklungen überlagerten Stromkomponenten erfolgen:
- erste Stromkomponente (Maschinenbetrieb) für die Erzeugung eines vierpoligen Wechselfeldes,
- zweite und dritte Stromkomponenten (Magnetlagerbetrieb) für die Erzeugung eines zweipoligen Drehfeldes.

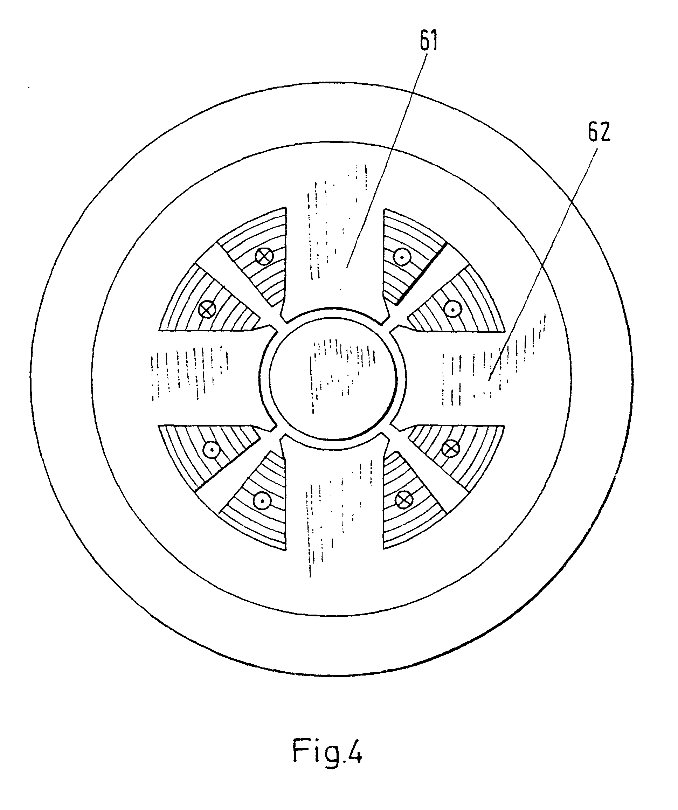

Fig. 4, Fig. 5 und Fig. 6 zeigen diese Komponenten in Einzeldarstellung für einen beliebig gewählten Betriebszustand der magnetgelagerten Maschine. Die Strombeläge der acht Polwicklungsquerschnitte sind innerhalb einer Figur betragsmäßig gleich. Ebenso sind die Stromrichtungen in den Einzelpolwicklungen innerhalb einer Figur zueinander festgelegt. Bei Änderung des Vorzeichens der Stromkomponente ändert sich somit die Stromrichtung in allen Polwicklungsquerschnitten einer Figur. Die Amplitude und das Vorzeichen jeder Stromkomponente ist frei und unabhängig von den anderen Stromkomponenten einstellbar. Eine Variation der ersten Stromkomponente führt daher, wie Fig. 4 verdeutlicht, zur Einstellung der Amplitude und Richtung eines vierpoligen Wechselfeldes. Dieses steht in Wechselwirkung mit dem vierpoligen Rotor und erzeugt ein Drehmoment.

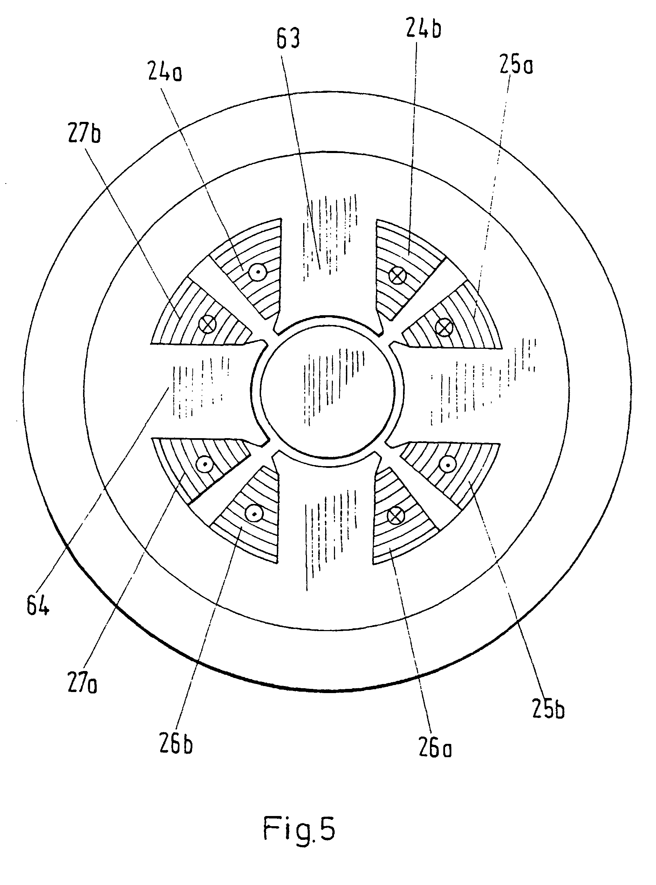

In Figur 5 ist die Richtung der zweiten Stromkomponente dargestellt. Man erkennt, daß die Polwicklungsquerschnitte 24a und 27b sowie 25b und 26a sich innerhalb einer Nut gegenseitig aufheben. Die verbleibenden Polwicklungsquerschnitte 24b und 25a sowie 26b und 27a wirken somit wie ein Strang einer zweipoligen Wicklung.

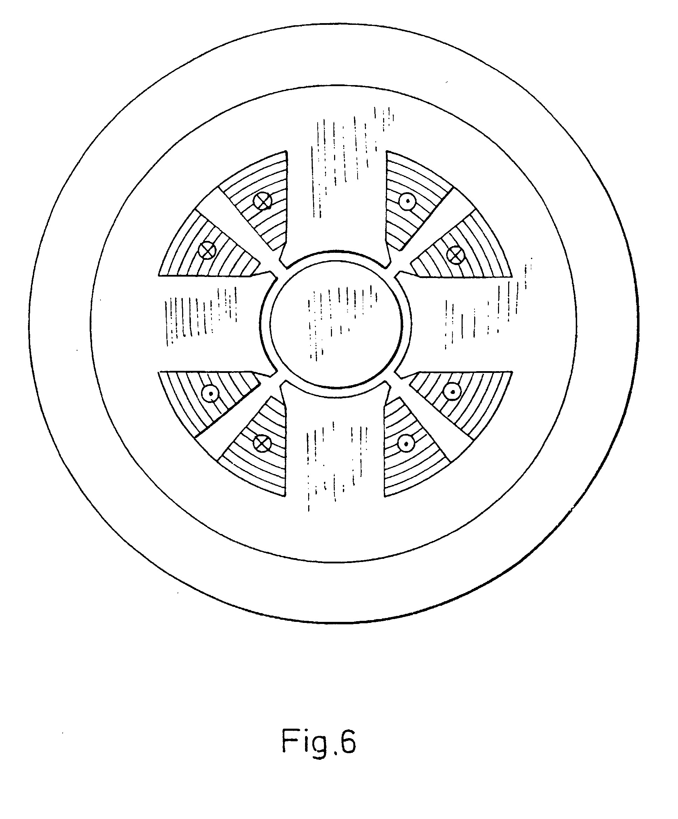

Figur 6 zeigt die Richtung der dritten Stromkomponente 3. Die Verteilung des Strombelages erfolgt in der gleichen Art wie in Fig. 5, jedoch um neunzig Grad gedreht. Mit der zweiten und dritten Stromkomponente lässt sich somit ein zweipoliges Drehfeld aufbauen und die radiale Tragkraft in Betrag und Richtung durch Wahl der Amplitude und Phasenlage der beiden Stromkomponenten einstellen.

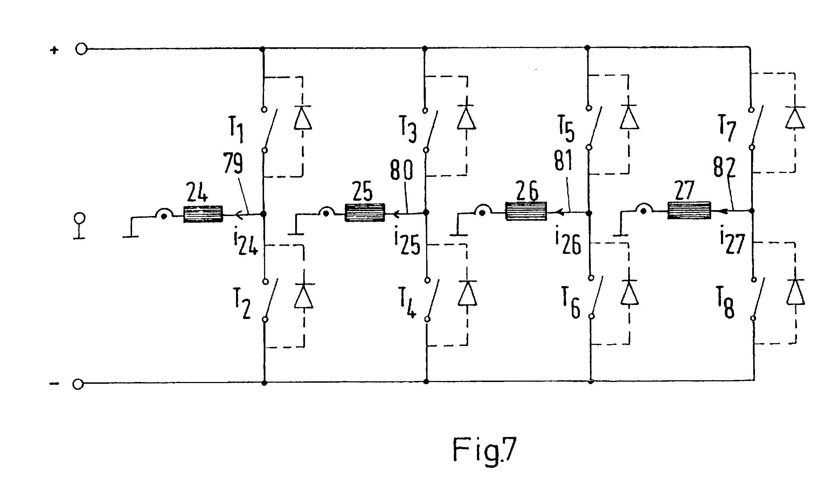

Die Bestimmung der einzelnen Stromkomponenten erfolgt unter Beachtung der Sollgrößenvorgabe und der Ist-Werte für beispielsweise Rotorlage und Drehzahl, Rotordrehwinkel oder Drehmoment nach Auswertung der Sensorsignale für Rotorlage und Rotordrehwinkel mittels einer Analogschaltung oder einer schnellen Rechnereinheit. Die Signale der Stromkomponenten werden polwicklungsbezogen überlagert, mittels einer Leistungselektronik verstärkt und den vier Polwicklungen 24,25,26,27 über getaktete Schalter oder analoge Leistungsverstärker zugeführt. Eine mögliche Brückenschaltung ist in Fig. 7 angegeben. Anstelle einer Stromeinprägung kann auch unter Berücksichtigung der Charakteristik der Regelstrecke eine Spannungseinprägung erfolgen.

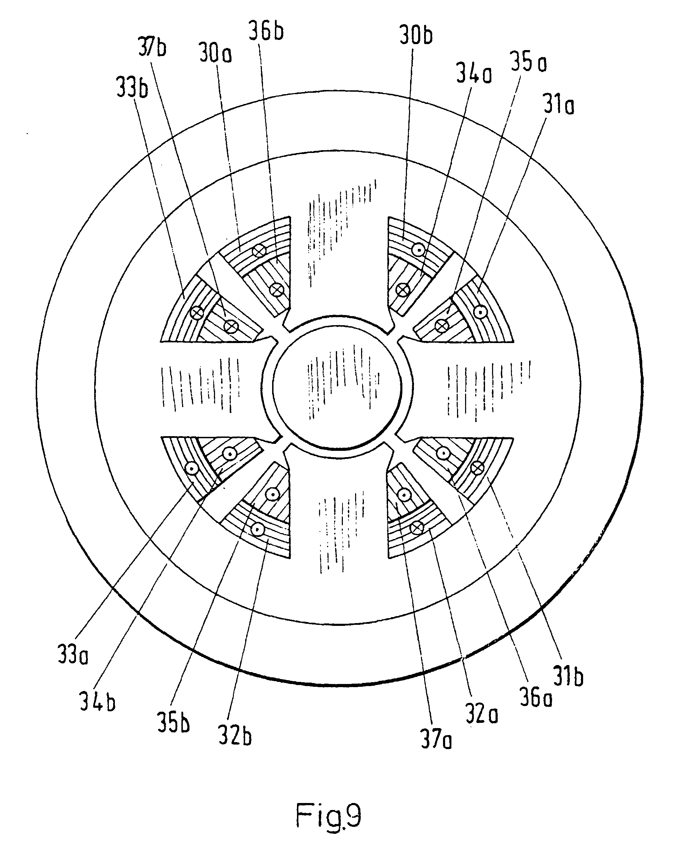

Fig. 9 zeigt eine wicklungstechnische Variante mit drei Strängen, bei der jeder Stromkomponente ein eigener Strang (Maschinenstrang: 30a, 30b, 31a, 31b, 32a, 32b, 33a, 33b; erster Magnetlagerstrang: 34a, 34b, 35a, 35b; zweiter Magnetlagerstrang: 36a, 36b, 37a, 37b) zugeordnet ist, wobei die Spulen eines Stranges seriell oder parallel verschaltet sein können. Die Überlagerung findet also nicht wie in Fig. 3 auf der Stromebene, sondern auf der Strombelags- bzw. Feldebene statt. Die Lage der einzelnen Strangspulen geht aus den Betrachtungen zu den Figuren 4 bis 6 hervor. Die Ströme der Stränge I-IV (Strang I: Polwicklung 24, Strang II: Polwicklung 25, Strang III: Polwicklung 26, Strang IV: Polwicklung 27) sowie der Stränge I'-III' (Strang I': Wicklungen 30-33, Strang II': Wicklungen 34-35 , Strang III': Wicklungen 36-37) lassen sich ineinander überführen.

Es gelten für die gewählten Stromrichtungszeichen folgende Transformationsbeziehungen:
i_{I} = i_{I'} - i_{II'} + i_{III'} ; i_{II} = i_{I'} - i_{II'} - i_{III'} ; i_{III} = i_{I'} + i_{II'} - i_{III'} ; i_{IV} = i_{I'} + i_{II'} + i_{III'}

Die Wicklungsanordnung von Fig. 9 ist in der Herstellung aufwendiger als die Wicklungsanordnung aus Fig. 3, erfordert jedoch nur die elektrische Ansteuerung von drei anstelle von vier Strängen. Welche Anordnung aus wirtschaftlicher Sicht günstiger ist, ist von Fall zu Fall abzuwägen. Von technischem Interesse ist unter Umständen in der Anordnung aus Fig. 3 die Möglichkeit, die Gewichtung zwischen der ersten sowie der zweiten und der dritten Stromkomponenten frei zuordnen zu können. So kann beispielsweise bei einer im Leerlauf befindlichen Maschine der gesamte zur Verfügung stehende Wicklungsquerschnitt nahezu zur Gänze zur Tragkraftbildung bzw. bei einer tragkraftmässig unbelasteten Maschine nahezu der gesamte Wicklungsquerschnitt zur Drehmomentbildung herangezogen werden. In einer Wicklungsanordnung nach Fig. 9 ist eine solche freie Zuordnung nicht möglich, da beispielsweise bei Leerlauf der Maschine nur der Wicklungsquerschnitt der Tragkraftwicklung zur Verfügung steht.

Die Rotorart der Maschine kann im Prinzip frei gewählt werden. Verwendbar sind beispielsweise Permanentmagnetrotoren, Kurzschlußkäfigrotoren oder Rotoren mit einer elektrisch hochleitfähigen Metallummantelung anstelle des Kurzschlußkäfigs.

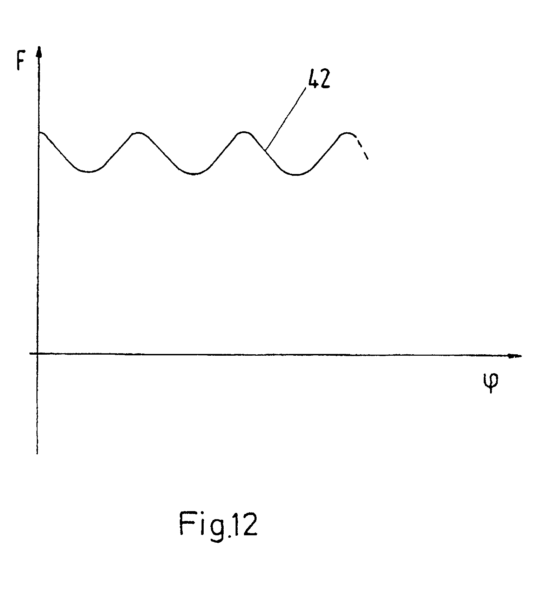

Bei nicht ausreichender Sehnung bzw. Verteilung der Wicklungen und bei nicht sinusförmigen Erregerfeldverteilungen entstehen durch den Oberwellengehalt der Luftspaltfelder bei Bestromung der Wicklung nach Fig.5 oder Fig. 6 bzw. der Stränge II' oder III' nach Fig. 9 mit einer konstanten Stromamplitude bei Drehung des Rotors winkelabhängige radiale Kraftschwankungen 42, wie sie beispielsweise in Fig. 12 dargestellt sind. Diesem Effekt sollte, um ein gutes Betriebsverhalten zu erzielen, bei der Bestromung der Wicklungen Rechnung getragen werden.

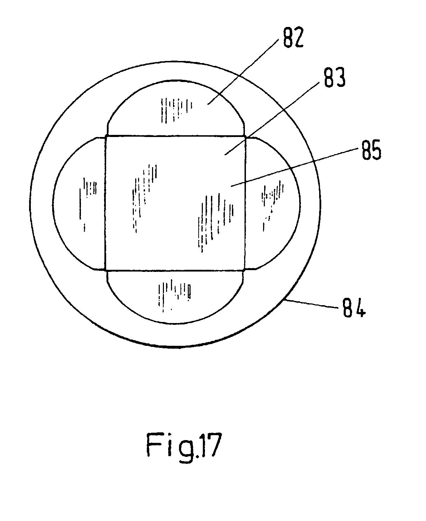

Eine annähernd sinusförmige Erregerfeldverteilung lässt sich bei Verwendung von Permanentmagnetrotoren 85 beispielsweise durch eine Formgebung der Permanentmagnete 82 mit einem winkelabhängigen Luftspalt zwischen dem Rotor und dem Stator 84 nach Fig. 17 erzielen. Günstig wirkt sich hinsichtlich einer sinusförmigen Feldverteilung auch eine diametrale Magnetisierung der Permanentmagnete aus. Mit 83 ist der ferromagnetische Rückschluss des Rotors bezeichnet. Aus Kostengründen kann es jedoch von Vorteil sein, konzentrierte Wicklungen und radial oder diametral magnetisierte Permanentmagnete ohne besondere Formgebung einzusetzen.

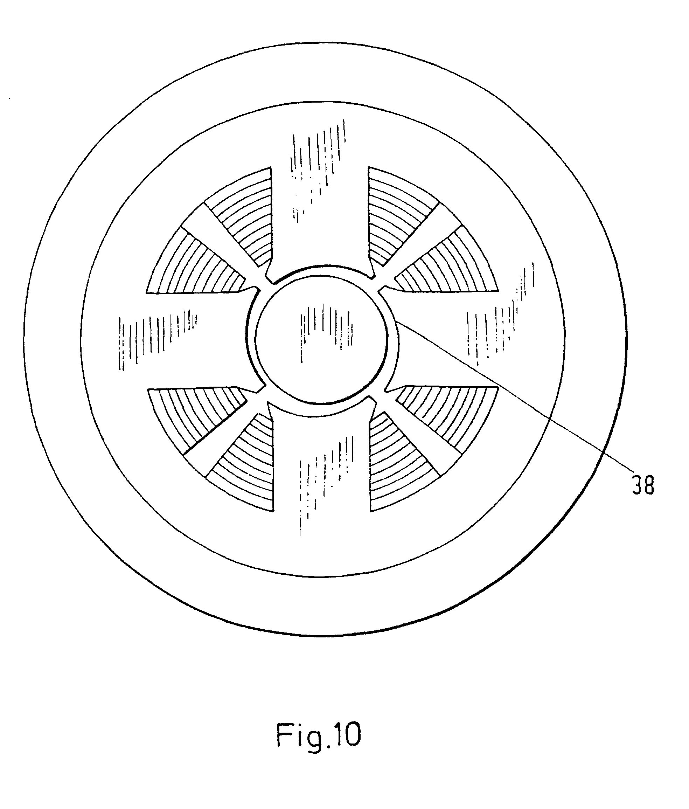

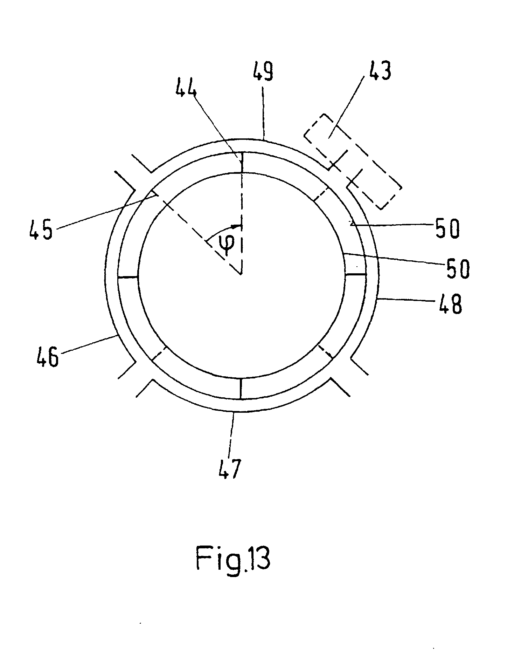

Da in der magnetgelagerten Maschine aus Fig. 3 bzw. Fig. 9 für den Maschinenbetrieb nur ein Wechselfeld zur Verfügung steht, ist zum Zeitpunkt des Anlaufes gegebenenfalls ein Hilfsmoment zur Überwindung der Totzone bereitzustellen. Dies kann beispielsweise durch einen unsymmetrischen Blechschnitt 38 im Bereich der Wicklungspole erfolgen (Fig. 10). Ein weiterer Lösungsvorschlag (Fig. 13) sieht einen oder mehrere axial oder radial zum Rotor angebrachte Hilfsmagnete 43 vor, die beispielsweise den vierpoligen Permanentmagnetrotor 50 aufgrund ihrer Zugkraft beim Starten in eine günstige Ausgangsposition 44 mit dem Winkel ϕ bringen. In der Stellung 45 der Magnetpolgrenze wäre das Startmoment bei beliebig hohem Strom null. Mit den Positionen 46,47,48 und 49 sind die Wicklungspole angedeutet. Um die Zugkraft zu unterstützen, können die Hilfsmagnete zusätzlich mit einem Eisenrückschluß versehen werden.

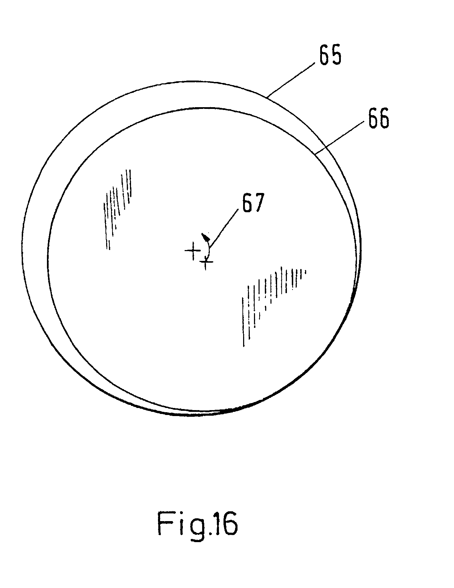

Eine Veränderung der Magnetpollage kann auch durch ein vom Magnetlagerteil gesteuertes Abwälzen des Rotors 66 an der Luftspaltstirnseite der Statorpole 65 bewirkt werden (Fig. 16). Infolge der unterschiedlichen Durchmesser ergibt sich beim Abwälzen eine wachsende Winkelverschiebung zwischen Magnet- und Statorpolen, sodaß der Rotor aus der Totzone, in der eine Drehmomententwicklung nicht möglich ist, herausgedreht werden kann. Mit 67 ist die Mittelpunktsbewegung des Rotors während des Abwälzens dargestellt. Es kann erforderlich sein, am Umfang des Rotors und/oder Stators ein Mittel zur Verhinderung eines Gleitens zwischen Rotor und Stator während der Abwälzbewegung vorzusehen (z. B. Verwendung von Werkstoffen mit hohen Reibwerten, Aufrauhen der Oberflächen, Verzahnung, etc.).

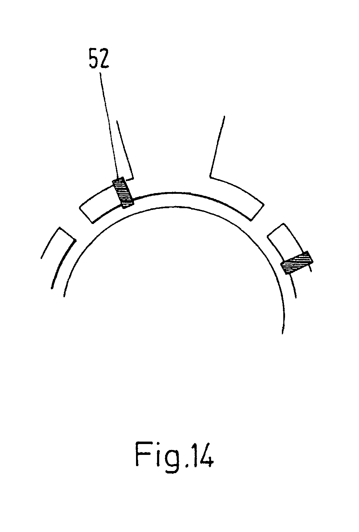

Eine weiterer Lösungsvorschlag ist in Fig 14 dargestellt. Die Statorpole sind einseitig mit einem Kurzschlußring 52 versehen, sodaß sich aufgrund der Kurzschlußströme anstelle des Wechselfeldes ein stark elliptisches Drehfeld im Luftspalt ergibt.

In den Figuren 3, 4, 5, 6, 9, 10, 13, 14, 16 und 17 wurden jeweils magnetgelagerte Maschinen mit Innenläufer dargestellt. Es besteht auch die Möglichkeit, die magnetgelagerte Maschine in Außenläuferausführung zu betreiben. Hierzu ist der Rotor als Ring oder Glocke auszuführen, die Statorpole zeigen nach außen.

Die Figuren 3, 4, 5, 6, 9, 10, 13, 14, 16 und 17 sind auch bezüglich der Polpaarzahl für die Drehmoment- und Tragkraftbildung sowie bezüglich der Strangzahl als beispielhaft zu sehen. Es lassen sich veränderte Polpaarzahlen realisieren, wobei zwischen der Polpaarzahl p_{M} für den Maschinenbetrieb und der Polpaarzahl p_{ML} für den Magnetlagerbetrieb die Beziehung p_{M} = p_{ML} ± 1 erfüllt sein muß. Durch Erweiterung der Strangzahl sowie der Anzahl Brückenzweige in der Leistungselektronik läßt sich auch erfindungsgemäss anstelle der Wechselfeldmaschine eine Drehfeldmaschine in den magnetgelagerten Antrieb integrieren.

## Patentansprüche

1. Magnetgelagerter elektrischer Antrieb, umfassend eine magnetgelagerte elektrische Maschine mit im Stator eingebrachten Wicklungen für die Drehmoment- und Tragkraftbildung und mit einem Rotor, welcher mit Permanentmagneten, einem Kurzschlusskäfig, oder einer elektrisch hochleitfähigen Metallummantelung bestückt ist, und eine analoge oder digitale Elektronik zur Steuerung, Regelung, Überwachung und Speisung der magnetgelagerten Maschine, wobei die einzelnen im Stator eingebrachten Wicklungen (24, 25, 26, 27) sowohl für die Drehmoment- als auch für die Tragkraftbildung herangezogen werden,
**dadurch gekennzeichnet, daß** die Wicklungen (24, 25, 26, 27) über eine entsprechende Speisung durch die Elektronik mit Stromkomponenten zur Erzeugung eines Drehfeldes für die Tragkraftbildung und mit Stromkomponenten zur Erzeugung eines Wechselfeldes für die Drehmomentbildung gespeist werden.

2. Elektrischer Antrieb nach Anspruch 1,
**dadurch gekennzeichnet, daß** die Wicklungen als Polwicklungen (24, 25, 26, 27, 55, 56) mit eigenem Elektronikanschluß (53,54) ausgebildet sind.

3. Elektrischer Antrieb nach Anspruch 2,
**dadurch gekennzeichnet, daß** sich eine Polwicklung aus einer einzelnen (24;25;26;27) oder mehreren miteinander verschalteten Spulen (57, 58) zusammensetzt.

4. Elektrischer Antrieb nach Anspruch 2 oder 3,
**dadurch gekennzeichnet, daß** zwei oder mehrere benachbarte Polwicklungen abhängig von der Bestromung der Polwicklungen magnetische Gegenpole (61, 62), einen gemeinsamen magnetischen Pol (63, 64), oder durch die Überlagerung ein Magnetfeld ausbilden, das sowohl in einen gemeinsamen magnetischen Pol als auch in magnetische Gegenpole zerlegt werden kann.

5. Elektrischer Antrieb nach Anspruch 4,
**dadurch gekennzeichnet, daß** durch die Bestromung der Polwicklungen - über den Umfang des Stators oder Rotors betrachtet - überlagerte magnetische Felder mit unterschiedlichen Polpaarzahlen, insbesondere mit sich um eins unterscheidenden Polpaarzahlen, einstellbar sind.

6. Elektrischer Antrieb nach Anspruch 4 oder 5,
**dadurch gekennzeichnet, daß** die Polwicklungen im Stator gemeinsam sowohl ein Drehfeld der Polpaarzahl p_{ML} erzeugen, dessen Amplitude und Phasenlage zur Regelung der Tragkraft bzw. zur Regelung der Rotorposition über die Bestromung der Polwicklungen einstellbar ist, als auch überlagert hierzu ein Wechselfeld der Polpaarzahl p_{M}=p_{ML}±1 erzeugen, dessen Amplitude zur Steuerung oder Regelung des Drehmomentes, zur Steuerung oder Regelung der Rotordrehzahl oder der Rotorposition über die Bestromung der Polwicklungen einstellbar ist.

7. Elektrischer Antrieb nach einem der vorangehenden Ansprüche,
**dadurch gekennzeichnet, daß** mit vier Polwicklungen, insbesondere mit vier konzentrierten Polwicklungen (24, 25, 26, 27), ein Drehfeld zur Tragkraftbildung und ein Wechselfeld zur Momentenbildung erzeugt wird, und daß für den sicheren Anlauf der magnetgelagerten Maschine gegebenenfalls eine Anlaufhilfe, insbesondere in der Gestalt eines unsymmetrischen Blechschnittes (38), eines oder mehrerer Hilfsmagnete (43) oder eines oder mehrerer Kurzschlußringe (52), verwendet wird, oder die günstige Anfaufposition über eine entsprechende Ansteuerung der Polwicklungen durch Abrollen (67) des Rotors (66) auf der dem Luftspalt zugewandten Statorfläche (65) eingestellt wird.

8. Elektrischer Antrieb nach einem der vorangehenden Ansprüche,
**dadurch gekennzeichnet, dass** im Stator Hilfspole (86) zur Verkürzung der Polweite angeordnet sind.

9. Elektrischer Antrieb nach einem der vorangehenden Ansprüche,
**dadurch gekennzeichnet, daß** der magnetisch wirksame Teil des Rotors und vorzugsweise auch des Stators scheiben-, ring- oder glockenförmig mit gegenüber den radialen Abmessungen kleinen axialen Abmessungen ausgeführt ist, sodaß aufgrund der Kraftwirkung der magnetischen Luftspaltfelder eine für den Betrieb ausreichende, stabile passive magnetische Lagerung in axialer Richtung und den beiden Kipprichtungen erfolgt.

## Claims

1. Magnetically journalled electrical drive including a magnetically journalled electrical machine with windings which are inserted in the stator for the production of the torque and the suspension force and with a rotor which is equipped with permanent magnets, a short circuit cage or an electrically highly conductive metal jacket, as well as an analog or digital electronic circuit for the control, regulation, monitoring and excitation of the magnetically journalled machine, wherein the individual windings (24, 25, 26, 27) introducted into the stator are used for the generation of both torque and suspension force,
**characterised in that** the windings (24, 25, 26, 27) are fed via a corresponding feed by the electronic circuit with current components to produce a rotary field for the production of the suspension force and with current components for the generation of an alternating field for the production of the torque.

2. Electrical drive in accordance with claim 1
**characterised in that** the windings are formed as pole windings (24, 25, 26, 27, 55, 56) with their own electronic connection (53, 54).

3. Electrical drive in accordance with claim 2
**characterised in that** a pole winding is composed of a single coil (24; 25; 26; 27) or combined of a plurality of coils (57, 58), which are connected to one another.

4. Electrical drive in accordance with claim 2 or claim 3
**characterised in that** two or more adjacent pole windings develop, in dependence on the current excitation of the pole windings, magnetic counter-poles (61, 62), a common magnetic pole (63, 64) or, through the superposition, a magnetic field which can be decomposed into both a common magnetic pole and also into magnetic counter-poles.

5. Electrical drive in accordance with claim 4
**characterised in that** through the current excitation of the pole. windings ― considered over the periphery of the stator or of the rotor ― superimposed magnetic fields with different numbers of pole pairs, in particular with numbers of pole pairs differing by one, can be selected.

6. Electrical drive in accordance with claim 4 or claim 5
**characterised in that** the pole windings in the stator jointly form both a rotary field of the number of pole pairs p_{ML}, of which the amplitude and phase can be set via the current excitation of the pole windings for the regulation of the suspension force or for the regulation of the rotor position respectively, and, superimposed on this, an alternating field of the number of pole pairs p_{M} = p_{ML} ± 1, of which the amplitude can be set via the current excitation of the pole windings for the control or regulation of the torque, for the control or regulation of the speed of rotation of the rotor or of the rotor position.

7. Electrical drive in accordance with one of the preceding claims
**characterised in that** with four pole windings, in particular with four concentrated pole windings (24, 25, 26, 27), a rotary field is produced for the production of suspension force and an alternating field is produced for the production of torque; and **in that**, if required, a start-up aid for the reliable start-up of the magnetically journalled machine is used, in particular in the form of an asymmetrical sheet metal cut (38), of one or more auxiliary magnets (43) or of one or more short-circuit rings (52), or the favourable start-up position is set via a corresponding excitation of the pole windings through the rolling off (67) of the rotor (66) on the stator surface (65) which faces the air gap.

8. Electrical drive in accordance with one of the preceding claims
**characterised in that** auxiliary poles (86) are provided in the stator for the shortening of the pole width.

9. Electrical drive in accordance with one of the preceding claims
**characterised in that** the magnetically effective part of the rotor and preferably also of the stator is designed in disc, ring or bell shape with axial dimensions which are small relative to the radial dimensions so that a stable passive magnetic journalling in the axial direction and the two tilt directions which is sufficient for the operation arises as a result of the force action of the magnetic air gap fields.

## Revendications

1. Entraînement électrique à palier magnétique comprenant une machine électrique à palier magnétique avec des enroulements intégrés dans le stator pour la production d'un couple de rotation et d'une force porteuse et avec un rotor constitué d'aimants permanents, d'une cage de court-circuit ou d'un revêtement métallique hautement conducteur d'électricité et une électronique analogique ou numérique pour le contrôle, la régulation, la surveillance et l'alimentation de la machine à palier magnétique, moyennant quoi les différents enroulements intégrés dans le stator (24, 25, 26, 27) servent pour la production du couple de rotation ainsi que pour la production de la force porteuse, **caractérisé en ce que** les enroulements (24, 25, 26, 27) sont alimentés par l'intermédiaire d'une alimentation appropriée par l'électronique avec des composantes de courant produisant un champ rotatif pour la production de la force porteuse et avec des composantes de courant pour la production d'un champ variable pour la production d'un couple de rotation.

2. Entraînement électrique selon la revendication 1, **caractérisé en ce que** les enroulements sont conçus comme des enroulements d'excitation (24, 25, 26, 27, 55, 56) avec un raccordement électronique (53, 54) approprié.

3. Entraînement électrique selon la revendication 2, **caractérisé en ce qu'**un enroulement d'excitation est constitué d'un simple bobine (24 ; 25 ; 26 ; 27) ou de plusieurs bobines branchées ensemble (57, 58).

4. Entraînement électrique selon la revendication 2 ou 3, **caractérisé en ce que** deux, ou plus, enroulements d'excitation voisins constituent, en fonction de l'alimentation en courant des enroulements d'excitation, des pôles magnétiques opposés (61, 62), un pôle magnétique commun (63, 64) ou, du fait de la superposition, un champ magnétique qui peut être décomposé en un pôle magnétique commun ou en pôles magnétiques opposés.

5. Entraînement électrique selon la revendication 4, **caractérisé en ce que** grâce à l'alimentation en courant des enroulements d'excitation, considéré sur la circonférence du stator ou du rotor, des champs magnétiques superposés avec différents nombres de paires de pôles, notamment avec des nombre de paires de pôles différents de un, peuvent être ajustés.

6. Entraînement électrique selon la revendication 4 ou 5, **caractérisé en ce que** les enroulements d'excitation du stator produisent ensemble un champ rotatif du nombre de paires de pôles pML dont l'amplitude et la phase peuvent être ajustées par l'intermédiaire de l'alimentation encourant des enroulements d'excitation afin de réguler la force porteuse ou position du rotor et produisant un champ variable du nombre de paire de pôles pM = pML ± 1 dont l'amplitude peut être ajustée par l'intermédiaire de l'alimentation en courant des enroulements d'excitation afin de contrôler ou de réguler le couple de rotation, de contrôler ou de réguler la vitesse de rotation du rotor ou de la position du rotor.

7. Entraînement électrique selon l'une des revendications précédentes, **caractérisé en ce qu'**avec quatre enroulements d'excitation (24, 25, 26, 27), un champ rotatif pour la production d'une force porteuse et un champ variable pour la production d'un couple, est produit et **en ce que**, pour le démarrage de la machine à palier magnétique une aide au démarrage est utilisé, notamment sous la forme d'une tôle découpée asymétrique (38), d'un ou plusieurs aimants auxiliaires (43) ou d'une ou plusieurs bagues de court-circuit (52) ou la position favorable est réglée par l'intermédiaire d'un contrôle approprié des enroulements d'excitation par roulement (67) du rotor (66) du côté de la surface du rotor (65) orientée du côté de l'entrefer.

8. Entraînement électrique selon l'une des revendications précédentes, **caractérisé en ce que** des pôles auxiliaires (86) sont disposés dans la stator pour la réduction de l'écartement des pôles.

9. Entraînement électrique selon l'une des revendications précédentes, **caractérisé en ce que** la partie magnétiquement efficace du rotor et, de préférence, du stator, a une forme de disque, annulaire ou de cloche avec des dimensions axiales petites par rapport aux dimensions radiales, de telle sorte que, du fait de l'action de la force des champs magnétiques d'entrefer, un logement magnétique stable et passif, suffisant pour le fonctionnement, soit réalisé dans la direction axiale et dans les deux directions de basculement.
